Europäisches Patentamt

European Patent Office

Office européen des brevets

(19)

(11) **EP 1 179 906 A2**

(12) ## EUROPEAN PATENT APPLICATION

(43) Date of publication:
**13.02.2002 Bulletin 2002/07**

(51) Int Cl.[7]: **H04L 1/00**, H04L 1/06

(21) Application number: **01306505.7**

(22) Date of filing: **30.07.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **07.08.2000 GB 0019386**

(71) Applicant: **ALCATEL
75008 Paris (FR)**

(72) Inventors:
• **Ait Sab, Omar
91650 Breuillet (FR)**
• **Desbruslais, Stephen Raymond
London SE9 3BD (GB)**

(74) Representative: **Hackney, Nigel John et al
Mewburn Ellis, York House, 23 Kingsway
London WC2B 6HP (GB)**

(54) **Optical transmission of error control data**

(57)     The present invention provides a method of optical data transmission whereby digital information data and its associated error control data may be transmitted via an optical transmission line without requiring an increase in the transmission bit rate of the information data. It will be clear that this may be achieved, according to the present invention, by obviating the need to transmit information data and its associated error control data together via the same WDM transmission channel. That is to say, a subset of one or more WDM transmission channels is used in transmitting data of the first type, but not simultaneously used in transmitting data of the second type. The data of the second type is transmitted via a different subset of one or more other WDM transmission channels.

In this way, the present invention aims to mitigate the aforementioned penalties associated with increasing the bit rate on an optical transmission channel in order to accommodate redundant bits associated with bit error control. In particular, by transmitting channel-encoded data employing wavelength division multiplexing (WDM) the present invention provides a method whereby one subset of the WDM channels of an optical transmission line is employed for the transmission of data including information data ('information channels') but excluding error data, and another separate subset is employed for the transmission of the error control data ('error channels') associated with aforementioned information data (e.g. check bits, bytes or symbols in the case of e.g. RS codes).

Fig.2.

EP 1 179 906 A2

**Description**

The present invention relates to a method and apparatus for the transmission of digital error control data, and in particular, for the transmission of such data via an optical transmission line using wavelength division multiplexing.

The waveform of a digital data signal transmitted along an optical transmission line typically suffers signal degradation as the waveform propagates. Optical imperfections or irregularities in the material of the transmission line often result in random fluctuations in a signal waveform (e.g. intensity fluctuations caused by light scattering or absorption) thereby inducing random noise in the signal. Additionally, the optical properties of the transmission line material may induce a more systematic signal degradation through, for example, dispersion or self phase modulation which may each cause an optical waveform to progressively change shape during transit which is a further source of noise in the signal.

In the optical transmission of digital data, such signal noise often leads to 'bit errors' whereby a data bit originally transmitted as a 'one' bit is received as a 'zero' bit, or vice versa. The rate at which such errors occur in a received signal (the bit error rate, BER) depends sensitively upon the signal-to-noise ratio (SNR) at the receiver input. One method of reducing the BER of a signal is to increase the power of the signal transmitter in an attempt to increase the SNR at the receiver. This method, of course, requires an increase in transmitter power, which may be undesirable or even unachievable.

An alternative technique to simply increasing the SNR of a signal to reduce bit errors is that of 'channel coding' which aims to overcome existing bit errors. For example, such a coding technique is that of 'block-coding' whereby, prior to transmission of a digital signal, the data stream is partitioned into blocks. Additional data bits, known as 'check bits', are then added to each data block. These check bits convey information relating to the properties of the data block with which they are associated (e.g. relating to the number of binary '1' bits in the data block). The receiver of these data blocks must subsequently analyse/decode the check bits of each block in order to detect, or to correct, one or more bit errors in a given received block. Where the block-coding employed permits error detection only the receiver will be unable to locate (and therefore correct) bit errors in a data block. In such a situation the receiver may then, for example, submit a request to the transmitter for re-transmission of the data block in question should the data be corrupted and unacceptable. An example of this is the technique of Automatic Repeat Request (ARQ) known in the art.

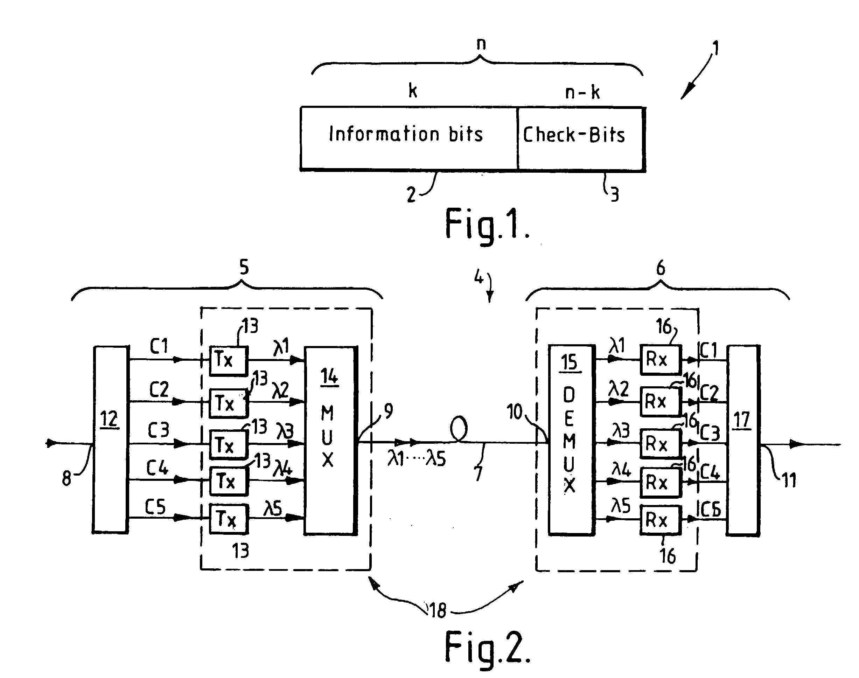

However, such a re-transmission would interrupt the continuous flow of data and increase traffic on the transmission line. This drawback has been overcome in the art by, for example, employing error correction block-coding whereby sufficient check bits are introduced into a data block prior to transmission to facilitate correction of bit errors at the receiver. This type of block-coding is an example of a Forward Error Correction (FEC) coding. The performance of an optical transmission line is greatly improved by the use of FEC in particular. It improves the bit-error-rate thereby enabling transmission line amplifier spacing to be increased without recourse to increasing transmitter power (and SNR). Numerous block-coding algorithms are known in the art, having varying degrees of complexity. However, the general principle by which they typically operate is that of redundancy. Consider a stream of digital data to be transmitted. This data stream contains what shall be referred to as information data. In order to block-encode this data it must first be partitioned into blocks and each such block be given a number of check bits. Figure 1 illustrates an example of this. Here an encoded data block (a 'codeword') comprises n bits in total of which only k bits are information data and the remaining (n-k) bits are check bits. The (n-k) check bits are redundant to the extent that they do not convey any of the information associated with the original (i.e. un-coded) data block. They are used only in bit-error processing of the k data bits to which they are added. Such block codes are identified by the notation "(n,k)".

As an illustrative example of bit-error correction consider the following example of a (7,4) block code. An information data bit-stream is partitioned into blocks of k=4 data bits [D1, D2, D3, D4] to which are appended (n-k)=3 check bits [C1, C2, C3] thus producing a codeword [D1/ D2, D3, D4, C1, C2, C3] of length n=7. The check bits are derived from the information data bits according to the following relations;

$$C1 = D1 + D2 + D3$$
$$C2 = D1 + D2 + D4 \qquad\qquad (1)$$
$$C3 = D1 + D3 + D4$$

wherein the addition sign ( + ) refers to modulo-2 addition (exclusive-OR). Thus, a codeword comprising these seven bits may be subsequently transmitted either as one codeword block for example, or via the method of interleaving or any other suitable method known in the art. Upon reception of this codeword the relationship between the data-bits Di (i=1, 2, 3) and the check-bits Ci (i=1, 2, 3), as defined by equations (1), may be employed by a decoder to check for and locate a single error in any of the seven bits as follows.

Noting the relation, in modulo-2 addition;

$$Ci + Ci = 0 \; ; \; i = 1,2,3 \tag{2}$$

one can write;

```
C1 + D1 + D2 + D3 = 0
C2 + D1 + D2 + D4 = 0          (3)
C3 + D1 + D3 + D4 = 0
```

By calculating the left hand side of the three equations (3), a decoder is able to detect and locate (and therefore correct) a single error in any of the seven codeword bits, or to detect (but not locate and correct) two bit errors. That is to say, should a single bit error exist in the received codeword (e.g. a bit has changes from 'one' to 'zero', or vice versa) then the right hand side of one or more of the three equations (3) will be non-zero when determined by the decoder. A non-zero result can only occur if a bit error is present in the received codeword.

The degree of error correction possible increases with the number of redundant bits transmitted in a given codeword. However, increasing redundancy for a fixed bit transmission rate necessarily means a reduction in the rate of data (information) transmission, since only a portion of a codeword contains information data. Alternatively, in order to maintain a constant information data transmission rate it would typically be necessary to increase the overall bit transmission rate in order to accommodate the transmission of check-bits, thus requiring an increase in required bandwidth capacity of transmission channels.

For example, when employing an FEC block code such as the concatenated Reed-Solomon (RS) (225,239) +(255,223) codes, the bit rate typically has to be increased by 23% in order to maintain a constant information data transmission rate. The gain resulting from the use of FEC codes is therefore partially offset by penalties arising from an increase in the bit rate. Such penalties include the increase of bandwidth, jitter and fibre non-linearities. Additionally, component frequency ratings are more stringent. Penalties such as these arise through, for example, having to reduce the bit period when transmitting data (information data plus check bits) at an increased bit rate. A consequence of such a reduction is a corresponding increase in the amplitude of the bit signals themselves. Increasing signal amplitude pushes the signal further towards the non-linear optical region thereby increasing the undesirable non-linear effects of e.g. cross-phase modulation (XPM), self-phase modulation (SPM), interchannel interference etc.

It is an aim of the present invention to overcome at least some of the deficiencies in the prior art.

According to a first aspect of the present invention, there is provided a method of transmitting, via an optical transmission line, digital data which includes data of a first type and data of a second type, the second type being data associated with control of errors in corresponding data of at least the first type, wherein;

the digital data is transmitted using a plurality of wavelength division multiplexed optical transmission channels such that data of the first type is transmitted via a channel different to that via which data of the second type is transmitted.

In referring to "wavelength division multiplexed channels", it is to be understood that reference is made to the well known technique of optical data transmission using "wavelength division multiplexing" (WDM). WDM utilises the large bandwidth within which it is possible to transmit data along an optical fibre transmission line by multiplexing a number of optical signals into a single fibre. Each optical signal is carried by (i.e. modulates) a different narrow laser wavelength band known as a "channel". These channels are separated ("spaced") in wavelength by, typically, several nanometres but have individual band-widths much smaller than this. In "Dense WDM" (DWDM) and in "High Density WDM" (HDWDM) systems channel spacings are lower than in ordinary WDM systems. It is to be understood that the present invention is applicable to any such WDM system or technique (i.e. WDM, DWDM, HDWDM and the like).

Thus, it will be understood that according to the first of its aspects, the present invention provides a method of optical data transmission whereby digital information data and its associated error control data may be transmitted via an optical transmission line without requiring an increase in the transmission bit rate of the information data. It will be clear that this may be achieved, according to the present invention, by obviating the need to transmit information data and its associated error control data together via the same WDM transmission channel. That is to say, a subset of one or more WDM transmission channels is used in transmitting data of the first type, but not simultaneously used in transmitting data of the second type. The data of the second type is transmitted via a different subset of one or more other WDM transmission channels.

In this way, the present invention aims to mitigate the aforementioned penalties associated with increasing the bit rate on an optical transmission channel in order to accommodate redundant bits associated with bit error control.

In particular, by transmitting channel-encoded data employing wavelength division multiplexing (WDM) the present invention provides a method whereby one subset of the WDM channels of an optical transmission line is employed for the transmission of data including information data ('information channels') but excluding error data, and another separate subset is employed for the transmission of the error control data ('error channels') associated with aforementioned information data (e.g. check bits, bytes or symbols in the case of e.g. RS codes).

The spectral efficiency of the transmission scheme is typically not affected according to the present invention since the WDM channel spacing can be made proportionally smaller to accommodate additional WDM channels dedicated to the transmission of error-control data. This is possible by virtue of not having to increase bit rates in the channels. For example, a 64 channel WDM transmission system could be modified to comprise 80 WDM channels (more closely spaced) without increasing the overall transmission bandwidth when incorporating a 25% overhead (i. e. coding rate is 0.8). Preferably, data of said first type is transmitted substantially synchronously with data of said second type to which it corresponds. More preferably, first and second type data is transmitted in association with alignment data with which data of said first data type and data of said second type may be identified as corresponding to each other.

Preferably, the said second type of data is derived via forward error correction (FEC) coding the said first type of data. It is to be understood that such codes may be employed for error detection alone as well as, or instead of, error correction according to the present invention. Preferably, error correction coding is employed. Furthermore, as is known in the art of FEC, data of the second type may be used in the detection or correction of bit errors within the entire codeword of which it forms a part (i.e. data of the second type may be employed in controlling errors within itself).

Preferably the data of the first type is segmented into first data blocks and data of the second type is segmented into second data blocks such that a given one of the second data blocks contains data which is associated with the control of errors in a corresponding given one of the first data blocks. Thus, it is preferable that block-coding is employed in the present invention. Corresponding first data blocks and second data blocks may be transmitted substantially synchronously.

In addition, it is preferable that corresponding first data blocks and second data blocks are transmitted in association with alignment data with which said first and second data blocks may be identified as corresponding to each other.

Preferably, each one of the second data blocks is derived from a corresponding one of the first data blocks by forward error correction coding of said one of the first data blocks.

Thus, it will be understood that each block of error control data may be derived from a corresponding block of information data such that the latter contains data relating to the control of errors in the former (or in both the former and the latter) as is known in the art of FEC coding.

Furthermore, a second data block (e.g. of error bits or bytes), once derived, need not be subsequently added to the corresponding first data block prior to transmission. That is to say, preferably, a complete 'codeword' data item need not be constructed prior to transmission since whole codewords need not be transmitted according to the present invention, as is conventionally the case. Of course, such conventional codeword production could be employed, and the constituent error-control and information data blocks of the codeword be subsequently separated prior to transmission. Data blocks (of both types) may be derived via a known block-coding algorithm, such as a Reed-Solomon code (concatenated or otherwise).

Preferably, each said first data block is transmitted substantially synchronously with the said second data block to which it corresponds. For example, a given second data block may be transmitted substantially within the time period required to transmit the given first data block to which it corresponds.

Preferably, each data block is transmitted in association with alignment data with which a given said first data block and a given said second data block may be identified as corresponding to each other. That is to say, by transmitting alignment data together with both the information data blocks and the error control data blocks it becomes possible to identify which error control data blocks correspond to which information blocks once those blocks of the optical data signal have been received at a receiver. This obviates the need for synchronization between WDM error-channels and their corresponding WDM information-channels, the advantage of which shall be discussed below.

According to a second aspect of the present invention, there is provided a method of receiving a digital data transmission transmitted according to the first aspect of the present invention via an optical transmission line, wherein the received data of the second type is used to detect and/or correct errors in the received data. Thus, once received, the data blocks (of all types) may be corrected according to known FEC techniques.

Preferably, in accordance with the second aspect of the invention, data of said first data type is received substantially synchronously with the data of said second said data type to which it corresponds, and, more preferably, the received data of both the first data type and the second data type includes alignment data, with which received data of said first data type and received data of said second data type may be identified as corresponding to each other.

Preferably, the data received according to the second aspect of the present invention consists of first data blocks of the first data type and second data blocks of the second data type wherein one or more of the second data blocks is associated with the detection or correction of errors in a corresponding one of the first data blocks. Preferably each one of the second data blocks is associated with the correction of errors in a corresponding one of the first data blocks. Preferably, each first data block is received substantially synchronously with the said second data block to which it corresponds.

Thus, decoding/error-correction can proceed by pairing information data blocks and error control data blocks that are received in synchrony. For example, a given error-control block that is received (in an error channel) within the time period required to fully receive an information data block (in an information channel) may be paired with the latter for subsequent error correction decoding.

Preferably, the received data consists of first and second data blocks, each block having associated alignment data, wherein the alignment data are employed in identifying which of the received first and second data blocks are corresponding blocks. Thus, alignment data allows the receiver to pair together received information data blocks and their corresponding error-control data blocks, for subsequent error correction decoding, without recourse to synchronization.

According to a third aspect of the present invention there is provided apparatus for transmitting via an optical transmission line, digital data which includes data of a first type and data of a second type, the data of the second type being associated with control of errors in corresponding data of the first type at least, the apparatus including:

a data encoder including;

input means for receiving data of the first type, and
encoding means for deriving data of said second data type from said first data type, and output means for outputting said first and second data types via separate data channels; and,

an optical transmitting means for transmitting data of said first type and corresponding data of said second type via different wavelength division multiplexed optical transmission channels.

Preferably, the data encoder according to the third aspect of the invention is operable to output data of said first type and corresponding data of the second type substantially synchronously. More preferably, the data encoder is operable to output each of the first data type and the corresponding second data type in association with alignment data with which data of the first type and corresponding data of the second type may be identified as corresponding to each other.

Preferably, the second data type is derived by the data encoder via forward error correction (FEC) coding of data of the first type.

The data encoder is preferably operable to segment data of the first type into first data blocks and to segment corresponding data of the second type into second data blocks such that a given one of the second data blocks contains data which is associated with the control of errors in a corresponding given one of the first data blocks. The encoder is preferably. operable to output corresponding first data blocks and second data blocks substantially synchronously.

The encoder may also be operable to output corresponding first data blocks and second data blocks in association with alignment data with which said first and second data blocks may be identified as corresponding to each other. Preferably, the encoding means is operable to derive each one of the second data blocks from a corresponding one of the first data blocks by forward error correction coding of said one of the first data blocks.

According to a fourth aspect of the present invention, there is provided apparatus for receiving via an optical transmission line, digital data which includes data of a first type and data of a second type, data of the second type being data associated with control of errors in corresponding data of the first type at least, the apparatus including:

an optical receiver including receiving means for receiving optical data signals of the first data type and optical data signals of the second data type via different wavelength division multiplexed optical transmission channels;
a data decoder including input means for receiving data of said first type and data of said second type from said receiving means, wherein;
the data decoder includes means with which received data of the first type and corresponding data of the second type are identified as corresponding to each other.

Preferably, the data decoder according to the fourth aspect of the present invention further includes means for using received data of the second type in detecting or correcting errors in the received data. Furthermore, the data decoder is preferably operable to receive data of said first data type substantially synchronously with the data of said second data type to which it corresponds.

Yet more preferably, the received data of both the first data type and the second data type includes alignment data with which received data of said first data type and received data of said second data type may be identified as corresponding to each other and said data decoder is operable to identify data of the first data type and data of the second data type as corresponding to each other using said alignment data.

The data decoder is preferably operable to receive data consisting of first data blocks of the first data type and second data blocks of the second data type wherein one or more of the second data blocks is associated with the detection or correction of errors in a corresponding one of the first data blocks. Preferably, the data decoder is operable to receive a given first data block substantially synchronously with the said second data block to which it corresponds.

Preferably, the received data includes first and second data blocks, each block having associated alignment data, wherein the data decoder is operable to employ said alignment data in identifying which of the received first and second data blocks are corresponding blocks.

More preferably, the data received consists of first data blocks of the first data type and second data blocks of the second data type wherein each one of the second data blocks is associated with the detection or correction of errors in a corresponding one of the first data blocks, and said data decoder is operable to employ a given one of said second data blocks to detect or correct errors in the first data block to which said given one second data block corresponds.

There now follow non-limiting embodiments of the present invention, discussed with reference to the following drawings:

Figure 1 schematically illustrates an example of a codeword derived according to known block-coding techniques.
Figure 2 schematically illustrates an optical fibre communications system employing wavelength division multiplexing.
Figure 3 schematically illustrates separated corresponding information and error-control data blocks on respective WDM information- and error-channels, and their associated alignment data items.
Figure 4 illustrates an example of this in which alignment data words are simply added to the front of data blocks prior to transmission.

Referring to figure 2, there is illustrated an optical fibre communications system employing wavelength division multiplexing according to the present invention. The system comprises a data transmitter 5 having a data input terminal 8 via which information data may be input for subsequent FEC encoding and output via output terminal 9. Fibre-optic transmission line 7 is connected, at one end, to data output terminal 9 and, at the other end, to a data input terminal 10 of data receiver 6. This receiver has a data output terminal 11 via which received data maybe output subsequent to decoding.

Though not illustrated in figure 2, the optical transmission line 7 may further include amplifiers (such as Erbium-doped optical amplifiers) and/or repeaters.

The input 8 of transmitter 5 is connected to an input of a data encoder 12 which, in turn, has five channel output terminals (denoted C1, ...C5) each one of which is further connected to an input terminal of a respective one optical channel transmitter 13 (denoted Tx). The optical channel transmitters 13 are each connected, at their output (denoted $\lambda 1,...,\lambda 5$), to respective inputs of a wavelength division multiplexer 14 the output of which is then connected to optical fibre 7 at the transmitter output 9.

Receiver 6 comprises de-multiplexer 15 the input of which is connected to optical fibre 7 at receiver input 10. De-multiplexer 15 possesses five channel output terminals (denoted $\lambda 1,...,\lambda 5$) each one of which is connected to an input terminal of a respective optical channel receiver 16 (denoted Rx). Output terminals of each Rx 16 are connected to respective channel inputs (denoted C1, ...C5) of decoder 17. The output terminal of this decoder is connected to the output terminal of receiver 6 at 11.

Thus, it will be understood that according to this embodiment of the present invention, optical channel transmitters 13, multiplexer 14, fibre 7, de-multiplexer 15 and optical channel receivers 16 are arranged so as to form a wavelength division multiplexing (WDM) communications system 18 of a known architecture. It is to be understood that alternative known WDM architectures and methods may be employed in the system 18 without departing from the scope of the present invention.

In use, information data for transmission is input into transmitter 5, and thus encoder 12, via input terminal 8. Upon receipt of such data, encoder 12 preferably proceeds by encoding the data according to, for example, an FEC block-coding algorithm such as a Reed-Solomon (RS) type code. Accordingly, the received information data is partitioned into blocks of data of a given length, and for each such information data block a corresponding error-control data block is produced. Subsequent to block encoding, information data blocks and their corresponding error-control data blocks are output, preferably in synchrony, from encoder 12 via separate ones of the five channel outputs (C1,..., C5) of the encoder. For example, all error-control data blocks may be output via channel output C1, while all corresponding information data blocks are output via channel outputs C2 to C5.

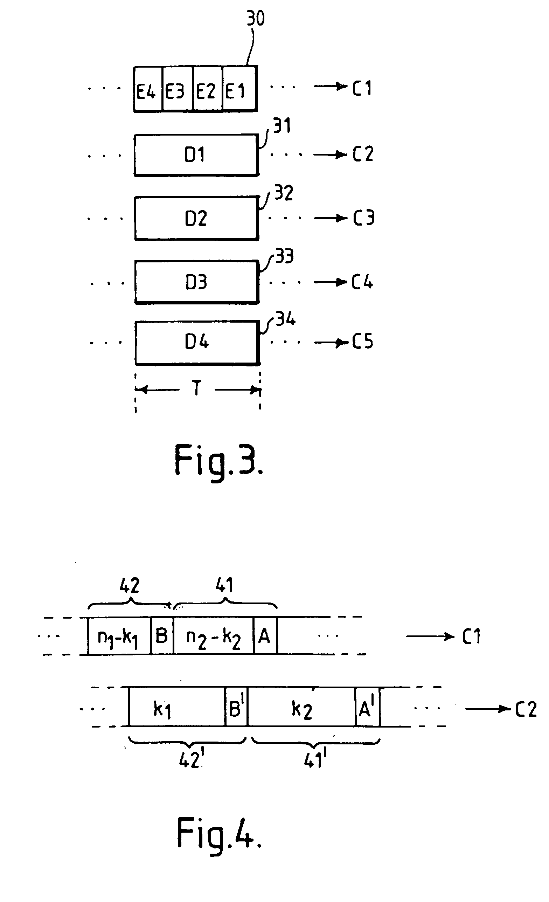

Figure 3 illustrates a simple schematic diagram of preferably synchronous data block output. Information data blocks 31, 32, 33 and 34, each k bits long, are output from encoder 12 on respective output channels C2, C3, C4 and C5 over a time period T. Within the same duration T, the four corresponding error-control data blocks E1, E2, E3 and E4, each (n-k) bits long are multiplexed (output), in a predetermined sequence, on error channel C1. The error blocks E1 to E4 could be multiplexed in a sequence other than that shown in figure 3.

In this example, the coding rate R (R=k/n) is equal to 0.8, thus permitting the four error blocks E1 to E4 to fit within a sequence 30 of duration equal to that of any one corresponding information data block. Of course, higher coding rates are also possible.

Figure 3 illustrates a simple example only, and it is to be noted that other known techniques of channel synchronisation may be used without departing from the scope of the present invention as would be readily apparent to the skilled person.

Indeed, synchronisation could be achieved prior to transmission, in accordance with any aspect of the present invention, by components other than the encoder as would be readily apparent to the skilled person.

The block data output on each given channel is subsequently input to a respective one optical transmitter 13 of the WDM system 18. Here the received block data signal is converted from an electrical signal into a corresponding optical signal. This conversion may, of course, be achieved by any suitable known method of electro/optical conversion readily known in the art (e.g. by direct modulation of a solid-state laser).

Error control data blocks are then transmitted via e.g. optical transmission channel $\lambda$1, preferably substantially in synchrony with the corresponding information data blocks on optical transmission channels $\lambda$2 to $\lambda$5. In accordance with known WDM transmission techniques, the five optical channels are multiplexed by multiplexer 14 and transmitted along fibre 7 to de-multiplexer 15 of receiver 6 whereupon the five channels are separated and input to respective optical receivers 16. Here the received block data signal is converted from optical form into a corresponding electrical signal. This conversion may, of course, be achieved by any suitable known method of electro/optical conversion readily known in the art (e.g. by employing an avalanche photo-diode). These electrical signals are input to decoder 17 via channel inputs C1 to C5, where C1 (as denoted earlier) carries error control blocks and C2 to C5 carry information data blocks and no error control blocks.

Provided synchrony between the information data blocks and their corresponding error-control data blocks is substantially still present when those blocks are input to decoder 17, then error correction may proceed, according to the present embodiment of the invention, as follows.

Consider the data blocks 30 to 34 illustrated in figure 3.

Data blocks such as these, input to decoder 17 on input channels C1 to C5 respectively, are preferably received in synchrony at the decoder. Each error block in the four-block sequence 30 in error channel C1 may be paired with its corresponding information data block simply by reading the sequence 30 according to the predetermined sequence order by which it was constructed at encoder 12. Once block pairing has occurred, decoding may proceed in accordance with known FEC techniques. The error corrected information data blocks may then be assembled into a data stream representing an error corrected received version of the original information data input the transmitter 5.

However, since each optical transmission channel may cause optical signals transmitted thereupon to suffer differing amounts of delay due to e.g. third-order dispersion, synchronization between the arrival times of the information data blocks and error-control data blocks may be difficult or impossible to maintain at the receiver/decoder stage as error-control and information data blocks become misaligned.

In another embodiment of the present invention, this difficulty may be overcome according to any aspect of the present invention, by transmitting alignment data (e.g. words) in association with each data block in each of the error channels and the information channels. The alignment words being such as to identify one information data block and one error block as being associated with each other (i.e. forming an info./error block pair) the need to receive such blocks in substantial synchrony may be obviated.

Preferably, these alignment words may be chosen so as to be unique to each information/error block pair and thereby permit both members of a given pair to be identified as such by the decoder 17 when received in or out of synchrony. That is to say, for example, each one information data block may be assigned an alignment word that is shared by only the associated error block for that information block, thereby enabling the former to be uniquely identified (by the decoder) as being associated only with the latter.

It is to be note that the alignment words need not be unique to one info./error block pair. That is, consecutive blocks (whose length may be vary depending upon e.g. the encoding scheme employed) in a given transmission channel may possess the same alignment word. These words may be used by the decoder to align a given error block with its associated information block provided that the maximum misalignment between those two blocks is less than the block length of the longest block of the pair (e.g. the information block). Provided that this condition is satisfied, upon receiving an information data block, the decoder will subsequently start receiving the associated misaligned error block within the time period required to complete receipt of the corresponding information data block (or vice versa). Any such error block received within this time period will then be deemed to be paired with that information block.

Whether the alignment words employed are unique to each block pair or not, it is preferable that alignment words used in error (or info.) channels further include a 'channel-type' identifier which identifies the block (to which the word is attached) as emanating from an error (or info.) channel and, therefore, as being an error (or info.) block. This enables the decoder 17 to identify received error blocks as being such and overcomes the possibility of the decoder mis-reading an error block as an information data block (or vice versa).

Figure 4 illustrates an example of this in which alignment data words are simply added to the front of data blocks prior to transmission. Data sequences 41 and 42 represent consecutive error-control data blocks (of size (n2-k2) and (n1-k1) respectively) in error channel C1. Alignment words A and B have been added to the front of these blocks respectively. The corresponding information data blocks 41' and 42' (of size k2 and k1 respectively) are in information channel C2 and also have corresponding alignment words A' and B' added thereto (Additional info. channels C3 etc. not shown). Alignment words A and B not only identify the error blocks 41 and 42 as corresponding to information blocks 41' and 42', but also identify blocks 41 and 42 as being error-control blocks (and, therefore, not info. blocks).

Thus, at the decoder 17 information block 41' can be identified, using alignment words A and A', as corresponding to error block 41 and, consequently, can be paired for subsequent decoding. Alignment word A also tells the decoder 17 that block 41 is to be read as an error block. Similarly, blocks 42' and 42 may be paired using alignment words B and B'.

Although the addition of alignment data in transmission channels will require an increase in the overall channel bit rates if a given bit rate of information data (per channel) is to be maintained, the increase (i.e. overhead) required is typically very low and much less than that required to accommodate error-control data in an information channel as is conventionally done.

Preferably, any misalignments in the data blocks received at the decoder 17 may be removed, to within a single bit period if required, using a variable-length buffer store. For example, decoder 17 may store any one block of a data block pair in a buffer store until the corresponding other block of that pair is received. The block pair may then be decoded.

Indeed, once alignment words have been detected for a given info./error block pair, the bits contained within respective blocks may be loaded in parallel into appropriate registers within decoder 17 (e.g. RS registers or the like, as known in the art). Decoding may then commence when all bits of both the information and error data blocks have been loaded into the decoder registers. If loading of e.g. information bits is completed before the loading of the corresponding error bits (or vice versa) then subsequently received information bits (of another block) may be held in a buffer until the loading of said corresponding error bits is complete (or vice versa).

Furthermore, according to any aspect of the present invention, relative transmission-time delays between data blocks on information channels and on error channels may be minimised by choosing the error channel to the one that has the median (or thereabouts) transmission delay. That is to say, it is well known that each one WDM channel will possess a transmission delay differing from that of the other WDM channels (due to the wavelength differences between channels). By transmitting error blocks via the WDM channel (or channels) having a delay closest to the median delay (of all of the WDM channels used), the relative transmission delay (considered across all channels) between error channels and their associated information data channels may be minimised. Thus, in minimising relative channel delays in this way, one may consequently minimise the misalignment between error and information blocks received at decoder 17.

As a further embodiment of the present invention according to any of its aspects, a spare WDM optical transmission channel may be provided on the optical transmission line. Thus, should any one of the transmission channels fail, the spare channel may be subsequently employed. This applies to the error channels also. However, it is an advantage of the present invention that should a WDM channel fail and should that channel be an error channel, transmission of information data will not be interrupted since, preferably, error correction coding techniques employed according to the present invention do not modify the information data being transmitted.

Furthermore, by transmitting error control data via a separate one or more transmission channels, any persistent noise sources (e.g. error bursts) present in a given channel of the transmission line will be less likely to severely effect the performance of that channel. This arises because error bursts in, say, a given information channel are unlikely to be present in an error channel of a transmission line. Since typically both information data blocks and error control blocks are corrected by FEC codes, this typically results in the error correcting ability of the code being more robust (i.e. less likely of being breached) to error bursts in any one channel.

It is to be noted that the apparatus illustrated in figure 2 is intended to be merely an example of the possible architecture of an optical transmitter and receiver according to the present invention. For example, rather than having physically separate encoder/decoder output/input channels (e.g. separate output transmission lines), the encoder/decoder may output/input error and information data on otherwise 'separate' output channels on one transmission line (e.g. via separate multiplexing channels or the like). In such a case subsequent signal de-multiplexing/multiplexing may be required before/after electro-optical conversion and WDM transmission/reception.

The embodiments described above are intended as examples only of the present invention according to any of its aspects. It is to be understood that variations and modifications may be made to these embodiments, such as would be known to the person skilled in the art, without departing from the scope of the invention.

**Claims**

1. A method of transmitting, via an optical transmission line, digital data which includes data of a first type and data of a second type, the second type being data associated with control of errors in corresponding data of the first type at least, wherein;

   the digital data is transmitted using a plurality of wavelength division multiplexed optical transmission channels such that data of the first type is transmitted via a channel different to that via which data of the second type is transmitted.

2. A method according to claim 1 wherein, data of said first type is transmitted substantially synchronously with data of said second type to which it corresponds.

3. A method according to claim 1 wherein, data is transmitted in association with alignment data with which data of said first data type and data of said second type may be identified as corresponding to each other.

4. A method according to any preceding claim wherein, data of the second type is derived via forward error correction (FEC) coding of data of the first type.

5. A method according to any preceding claim wherein, data of the first type is segmented into first data blocks and data of the second type is segmented into second data blocks such that a given one of the second data blocks contains data which is associated with the control of errors in a corresponding given one of the first data blocks.

6. A method according to claim 5 wherein corresponding first data blocks and second data blocks are transmitted substantially synchronously.

7. A method according to claim 5 wherein corresponding first data blocks and second data blocks are transmitted in association with alignment data with which said first and second data blocks may be identified as corresponding to each other.

8. A method according to any of claims 5, 6 or 7 wherein, each one of the second data blocks is derived from a corresponding one of the first data blocks by forward error correction coding of said one of the first data blocks.

9. A method of receiving a digital data transmission transmitted via an optical transmission line according to claim 1, wherein the received data of the second type is used in detecting or correcting errors in the received data.

10. A method of receiving a digital data transmission according to claim 9 wherein, data of said first data type is received substantially synchronously with the data of said second said data type to which it corresponds.

11. A method of receiving a digital data transmission according to claim 9 wherein, the received data of both the first data type and the second data type includes alignment data, with which received data of said first data type and received data of said second data type may be identified as corresponding to each other.

12. A method of receiving a digital data transmission according to any of claim 9, 10 or 11 wherein, the data received consists of first data blocks of the first data type and second data blocks of the second data type wherein one or more of the second data blocks is associated with the detection or correction of errors in a corresponding one of the first data blocks.

13. A method of receiving a digital data transmission according to claim 12 wherein, a given first data block is received substantially synchronously with the said second data block to which it corresponds.

14. A method of receiving a digital data transmission according to claim 12 wherein, the received data includes first and second data blocks, each block having associated alignment data, wherein the alignment data are employed in identifying which of the received first and second data blocks are corresponding blocks.

15. A method of receiving a digital data transmission according to claim 9 wherein, the data received consists of first data blocks of the first data type and second data blocks of the second data type wherein each one of the second data blocks is associated with the detection or correction of errors in a corresponding one of the first data blocks.

16. Apparatus for transmitting via an optical transmission line, digital data which includes data of a first type and data of a second type, the data of the second type being associated with control of errors in corresponding data of the first type at least, the apparatus including:

   a data encoder including;

      input means for receiving data of the first type, and encoding means for deriving data of said second data type from said first data type, and output means for outputting said first and second data types via separate data channels; and,

      an optical transmitting means for transmitting data of said first type and corresponding data of said second type via different wavelength division multiplexed optical transmission channels.

17. Apparatus according to claim 16 wherein; the data encoder is operable to output data of said first type and corresponding data of said second type substantially synchronously.

18. Apparatus according to any of claims 16 and 17 wherein; the data encoder is operable to output each of said first data type and said corresponding second data type in association with alignment data with which data of said first type and corresponding data of said second type may be identified as corresponding to each other.

19. Apparatus according to any of claims 16 to 18 wherein; said second data type is derived by said data encoder via forward error correction (FEC) coding of data of said first type.

20. Apparatus according to any of claims 16 to 19 wherein; said data encoder is operable to segment data of said first type into first data blocks and to segment corresponding data of said second type into second data blocks such that a given one of the second data blocks contains data which is associated with the control of errors in a corresponding given one of the first data blocks.

21. Apparatus according to claim 20 wherein; said encoder is operable to output corresponding first data blocks and second data blocks substantially synchronously.

22. Apparatus according to claim 20 wherein; said encoder is operable to output corresponding first data blocks and second data blocks in association with alignment data with which said first and second data blocks may be identified as corresponding to each other.

23. Apparatus according to any of claims 20, 21 or 22 wherein; said encoding means is operable to derive each one of the second data blocks from a corresponding one of the first data blocks by forward error correction coding of said one of the first data blocks.

24. Apparatus for receiving via an optical transmission line, digital data which includes data of a first type and data of a second type, data of the second type being data associated with control of errors in corresponding data of the first type at least, the apparatus including:

   an optical receiver including receiving means for receiving optical data signals of the first data type and optical data signals of the second data type via different wavelength division multiplexed optical transmission channels;
   a data decoder including input means for receiving data of said first type and data of said second type from said receiving means, wherein;
   the data decoder includes means with which received data of the first type and corresponding data of the second type are identified as corresponding to each other.

25. Apparatus according to claim 24, wherein the data decoder further includes means for using received data of the second type in detecting or correcting errors in the received data.

**26.** Apparatus according to any of claims 24 and 25 wherein, said data decoder is operable to receive data of said first data type substantially synchronously with the data of said second data type to which it corresponds.

**27.** Apparatus according to any of claims 24 to 26 wherein, the received data of both the first data type and the second data type includes alignment data with which received data of said first data type and received data of said second data type may be identified as corresponding to each other and said data decoder is operable to identify data of the first data type and data of the second data type as corresponding to each other using said alignment data.

**28.** Apparatus according to any of claims 24 to 27 wherein, the data decoder is operable to receive data consisting of first data blocks of the first data type and second data blocks of the second data type wherein one or more of the second data blocks is associated with the detection or correction of errors in a corresponding one of the first data blocks.

**29.** Apparatus according to claim 28 wherein, said data decoder is operable to receive a given first data block substantially synchronously with the said second data block to which it corresponds.

**30.** Apparatus according to claim 28 wherein, the received data includes first and second data blocks, each block having associated alignment data, wherein the data decoder is operable to employ said alignment data in identifying which of the received first and second data blocks are corresponding blocks.

**31.** Apparatus according to any of claims 24 to 30 wherein, the data received consists of first data blocks of the first data type and second data blocks of the second data type wherein each one of the second data blocks is associated with the detection or correction of errors in a corresponding one of the first data blocks, and said data decoder is operable to employ a given one of said second data blocks to detect or correct errors in the first data block to which said given one second data block corresponds.

**32.** Apparatus for receiving via an optical transmission line, digital data substantially as described in any one embodiment hereinbefore with reference to the accompanying drawings.

**33.** Apparatus for transmitting via an optical transmission line, digital data substantially as described in any one embodiment hereinbefore with reference to the accompanying drawings.

**34.** A method of transmitting digital data via an optical transmission line substantially as described in any one embodiment hereinbefore with reference to the accompanying drawings.

**35.** A method of receiving digital data via an optical transmission line substantially as described in any one embodiment hereinbefore with reference to the accompanying drawings.

EP 1 179 906 A2

# Fig.1.

| Information bits | Check-Bits |
|---|---|

k    n-k

n

2    3

1

4

# Fig.2.

**Transmitter (5):**

12 → C1, C2, C3, C4, C5 → Tx (13) → λ1, λ2, λ3, λ4, λ5 → MUX (14) → 9

8

**Link (7):** λ1...λ5, 10

**Receiver (6):**

DEMUX (15) → λ1, λ2, λ3, λ4, λ5 → Rx (16) → C1, C2, C3, C4, C5 → (17) → 11

18

12

Fig.3.

Fig.4.